(19) Europäisches Patentamt
European Patent Office
Office européen des brevets

(11) **EP 3 719 403 A1**

(12) **EUROPEAN PATENT APPLICATION**

(43) Date of publication:
**07.10.2020 Bulletin 2020/41**

(51) Int Cl.:
**F24D 3/14** (2006.01)   **F24D 3/16** (2006.01)
**F24D 19/00** (2006.01)

(21) Application number: **19166474.7**

(22) Date of filing: **01.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Jimenez Gamez, Javier**
  **28703 San Sebastian de los Reyes (ES)**

• **De Isabel Garcia, Juan Antonio**
  **28703 San Sebastian de los Reyes (ES)**

(72) Inventor: **Jimenez Gamez, Javier**
  **28703 San Sebastian de los Reyes (ES)**

(74) Representative: **Lahidalga de Careaga, Jose Luis**
  **Arturo Soria, 243 Dupl.**
  **28033 Madrid (ES)**

(54) **SKIRTING BOARD TO OPTIMISE RADIANT SURFACES**

(57)   SKIRTING BOARD FOR RADIANT SURFACES applicable to a radiant floor (2) including generating means (3) of a forced air current incorporated to it when manufactured or subsequently, and directed at said floor (2), consisting of fans (3) integrated in a module (4) that is connected to a section of the body of the skirting board (1), screwed or glued over or in front of it or inserted into a gap made or reserved for this purpose in the body of the skirting board (1). The module (4) includes a casing (41) consisting of closed and hollow body with a fan (3) or fans hidden inside or an open support (42) in which the fan (3) is inserted in view.

FIG. 1

**Description**

**PURPOSE OF THE INVENTION**

The invention, as expressed in the heading of this descriptive report, refers to a skirting board to optimise radiant surfaces which provides advantages and characteristics to the function to which they are dedicated, as described in detail later and that signifies an improvement on the current state of the art.

More specifically, the purpose of the invention is centred around a skirting board that incorporates means to generate an air current on the floor of the radiant surface in whose perimeter it is installed, which converts the sited radiant floor into a convector floor that is much more efficient in its performance, whether it is heating or cooling or both.

**THE INVENTION'S FIELD OF APPLICATION**

The field of application of this invention is framed within the industry sector dedicated to the manufacturing of accessory equipment and devices for heating and cooling systems, focussing particularly on the area of radiant surfaces.

**BACKGROUND OF THE INVENTION**

The old heating systems with 'radiators' and operating temperatures over 50/60ºC gave way to convection systems. Low-temperature convectors that allow working at a temperature of 35/40ºC. This change simply arose from incorporating an airflow to the element.

If in this way, focussing on radiant floors and on their limitations with respect to their emission capabilities, one can glimpse a possible improvement.

For the cooling floor systems, not only is the emission capability limited, but also the working temperature is completely constrained by the condensations that are produced on the floor.

In order to mitigate this effect and provide a larger working range, the objective of this invention is based on the fact that, in the same way as the radiators were transformed into low-temperature convectors, the radiant floors can be converted into more efficient floors by incorporating elements that generate an air current on the floor, by means of developing a skirting board especially structured for it, taking advantage of structural elements that always appear in the buildings.

On the other hand, and as a reference to the current state of the art, it must be pointed out that the existence of any other skirting board is unknown, at least by the applicant, used to optimise radiant surfaces and no other invention is known with a similar application that presents some technical, structural and constitutive characteristics equal or similar to those of the invention that is claimed herein.

In this regard, it should be mentioned that, although skirting boards that heat are known, they are limited to consisting of skirting boards that provide heat and are only considered for use as independent elements, not to optimise another heating system and even less a heating and cooling system. Specifically, skirting boards that heat by means of electrical resistances or electric convector skirting boards are known. However, unlike the skirting board of this invention, they do not have means that, by moving elements such as fans, emit or produce air currents.

**EXPLANATION OF THE INVENTION**

The skirting board to optimise radiant surfaces that the invention proposes can satisfactorily achieve the indicated objectives, with the characterising details that make it possible and that distinguish it appropriately included in the final claims that accompany this description.

More specifically, the skirting board that the invention proposes, as pointed out earlier, is a skirting board that incorporates the means to generate a current of air on the floor of the radiant surface on whose perimeter it is installed. In this way, the radiant floor is converted into a convector floor with an enormous and, consequently, much more efficient, useful surface.

These means to generate the described air current consist, preferably, of fan elements, which can be integrated in small modules that are connected to a section of conventional skirting board or else they consist of air-emitting elements integrated in the structure of the skirting board itself during its manufacturing process.

In the first case, the fact that the means of emitting an air current can be modular and compatible with all the existing skirting boards provides the advantage of being able to install them in all the possible models, and even change them easily in case of breakdown. In this option, these modular elements have one or more fans incorporated with a power supply of 12/24 V. In this way, they can be fed with simple and inexpensive transformers, being able to remain hidden in the interior of a casing with grates or remain visible, inserted in a support, being able, in one case or other, to be incorporated to the conventional skirting board in renovations and in new construction.

Preferably, the skirting board will be of the hollow type that helps hide the wires. The wiring of the transformer can be hidden over the skirting board, within it or under some trim.

In any case, each module is fastened, being able to be screwed under a casing, glued over or in front of the skirting board or fitted into a hollow made or reserved for this purpose between two sections of skirting board.

In addition, preferably, whether in the module that is incorporated to the skirting board when this is the already existing standard type, or else in the air outlet grates of the skirting board itself, when it is manufactured expressly for this purpose, the air current emitting means have dust protection means, for example filters or mesh, to prevent becoming clogged and the consequent decrease in performance, with a possible example being those used in the technology for PC heatsinks.

One way to test the effectiveness of the skirting board that is the subject of this invention is to compare two situations of a portion of surface area. With a calorimeter on the return and drive pipes, measure temperatures and flow on a conventional floor. Or by setting some variables, you can see the differences between the temperature jumps.

With a simple formula, standard in thermodynamics, the variations in the emission/absorption capacity of the surface can be seen:

$$Q=\dot{m}.Cp.\Delta T$$

Where:

$\dot{m}$ mass flow (g/s)
$Cp$ specific heat (J/g$^{o}$C)
$\Delta T$ temperature difference ($T_{inlet}$-$T_{outlet}$)

Due to the fact that the radiant floor is commonly designed to work at $\Delta T$=5 and this jump can be controlled by the production/distribution systems, it is proposed to maintain this jump and strengthen the flow and in this way increase the dissipation capability with the element turned on. It is very important to control the db that the system emits since the device will be installed in the interior of homes.

in the case of cooling, the system will improve even more the capacity of the surface since it would prevent the stratification of the air that tends, when cool and due to its low density, to remain on this surface. In this way, you would generate a forced convection that would increase the energy exchange.

Boundary conditions:

• Surface temperature for heating at 28$^{o}$C
• Surface temperature for cooling at 20$^{o}$C
• Comfort temperature for winter 22$^{o}$C
• Comfort temperature for summer 24$^{o}$C
• Surface material:
- Stoneware

| Density Kg/m3 | Conductivity W/m.k | Specific heat J/Kg.K | Emissivity |
| --- | --- | --- | --- |
| 2,500 | 2.3 | 1,000 | 0.93 |

- Ceramic

| Density Kg/m3 | Conductivity W/m.k | Specific heat J/Kg. K | Emissivity |
| --- | --- | --- | --- |
| 2,000 | 1 | 800 | 0.96 |

- Wood with high conductivity

| Density Kg/m3 | Conductivity W/m.k | Specific heat J/Kg. K | Emissivity |
| --- | --- | --- | --- |
| 870 | 0.29 | 1,600 | 0.9 |

• Turbulent air flow on the radiant surface
• Surface of 1 m2
• Air as ideal gas

- Radiant element without convection.

The supposition is maintained that the surface represents a small object on a large chamber, such as a dwelling. In this way, the equation would be:

$$\dot{Q}_{12} = A_1 \sigma \varepsilon_1 (T_1^4 - T_2^4)$$

Where:

$A_1$ Radiant area
$\sigma$ Stefan-Boltzmann constant W/m2.K$^4$
$\varepsilon_1$ Radiant element emissivity

$T_1^4$ Surface temperature

$T_2^4$ Comfort temperature

Radiant heat

With the above description, the radiant emission capacity of the surface would be:

Stoneware

$$\dot{Q}_{Calor\ G} = 1\ m^2 * 5.67 * 10^{-8} \frac{W}{m^2 * K^4} * 0.93 * (301.15^4 - 295.15^4)$$

Ceramic

$$\dot{Q}_{Calor\ C} = 1\ m^2 * 5.67 * 10^{-8} \frac{W}{m^2 * K^4} * 0.96 * (301.15^4 - 295.15^4)$$

Wood

$$\dot{Q}_{Calor\ M} = 1\ m^2 * 5.67 * 10^{-8} \frac{W}{m^2 * K^4} * 0.90 * (301.15^4 - 295.15^4)$$

Radiant cooling

[...]
The values can be seen in the summary table.

- Radiant element with natural convection.

In this case, the formula used for the study will be:

$$\dot{Q}_{conv} = hA_s(T_s - T_\infty)$$

$$L_c = \frac{A_s}{p}$$

$$Nu = \frac{hL_c}{k}$$

$$R_{aL} = \frac{g\beta(T_s - T_\infty)L_c^3 P_r}{v^2}$$

Where:

$A_s$ Radiant area
$h$ Convection coefficient

$T_s^4$ Surface temperature

$T_\infty^4$ Temperature sufficiently distant from the surface

$L_c$ Characteristic length
$p$ Perimeter
$Nu$ Nusselt number
$k$ Thermal conductivity
$R_{aL}$ Rayleigh number
$\beta$ Coefficient of volumetric expansion
$Pr$ Prandtl number
$v$ Kinematic viscosity of fluid
$g$ Gravity

Natural heating

[...]

Natural cooling

[...]

$$Qconvección\ calor\ natural = 46.18\ W$$

$$Qconvección\ frío\ natural = 15.45\ W$$

The convection value is independent for the different materials, since this is done through the fluid (air) which imposes the thermal conductivity.

- Radiant element with forced convection.

This case will be similar to the previous one, but including the movement of the fluid and the value of the Reynolds number:

$$\dot{Q}_{conv} = hA_s(T_s - T_\infty)$$

$$Re = \frac{V}{v}$$

Average for laminar regime:

$$Nu_x = \frac{hL}{k} = 0{,}664 Re_L^{0,5} Pr^{1/3}$$

Average of turbulent regime:

$$Nu_x = \frac{hL}{k} = 0{,}037 Re_L^{0,8} Pr^{1/3}$$

Where:

$Re$ Reynolds number
$v$ Kinematic viscosity of fluid
$V$ Fluid velocity
Forced heating
Forced cooling

the terms posed for an air velocity of 2 m/sec

$$Qconvección\ calor\ forzado = 62.7\ W$$

$$Qconvección\ frío\ forzado = 41.8\ W$$

Conclusion

|  | Q radiation | Q convection | Q forced convection | Q total |
|---|---|---|---|---|
| Heating | 34.63 | 46.18 | - | 80.81 |
|  | 34.63 | - | 62.7 | 97.33 |
| Cooling | 22.4 | 15.45 | - | 37.85 |
|  | 22.4 | - | 41.8 | 64.2 |

In the case of the radiant floor, for the heating function, at a velocity of 2 m/sec, it can be perceived that the energy transfer increases around 20%.
In the case of the radiant floor for the cooling function, at a velocity of 2 m/sec, it can be perceived that the energy transfer increases around 70%.
If the values of the air are taken to 4 m/sec, in the case of the cooling function, the energy transfer would be increased around 150%.
If an effectivity of the system is expected on the surface of only 30%, even so, it would show data such as:

Heating, 2 m/sec = 6%
Cooling, 2 m/sec = 21%
Cooling, 4 m/sec = 45%

**DESCRIPTION OF THE DRAWINGS**

In order to complement the description that is being made and in order to aid a better understanding of the characteristics of the invention, this descriptive report is accompanied by, as an integral part thereof, a set of plans in which, as an illustration but not limited to it, the following has been represented:

Figure number 1. It shows a schematic view in perspective of a radiant floor with an example of the skirting board that is the subject of the invention, specifically, an example with the air emission means integrated in a module connected to the conventional skirting board, noting its placement and the effect on the air flow, represented by arrows.

Figures number 2 and 3. They show schematic views, in frontal and lateral elevation perspectives, of an example of the skirting board, according to the invention, with the fan element that it comprises, specifically an example of a direct radial fan.

Figure number 4 and 5. They show schematic views, of front elevation and upper layout, respectively, of another example of the skirting board of the invention, in this case an example with a displaced radial fan.

Figures number 6, 7 and 8. They show schematic views, in perspective, of frontal elevation and lateral section, of another example of the module that incorporates the skirting board of the invention, in this case with the means to generate the air current consisting of a direct radial fan that is hidden in its interior.

## PREFERRED REALISATION OF THE INVENTION

In view of the mentioned figures, and in accordance with the numeration adopted, several realisation examples of can be observed but without limiting the invention to them, which include the parts and elements that are indicated and described below.

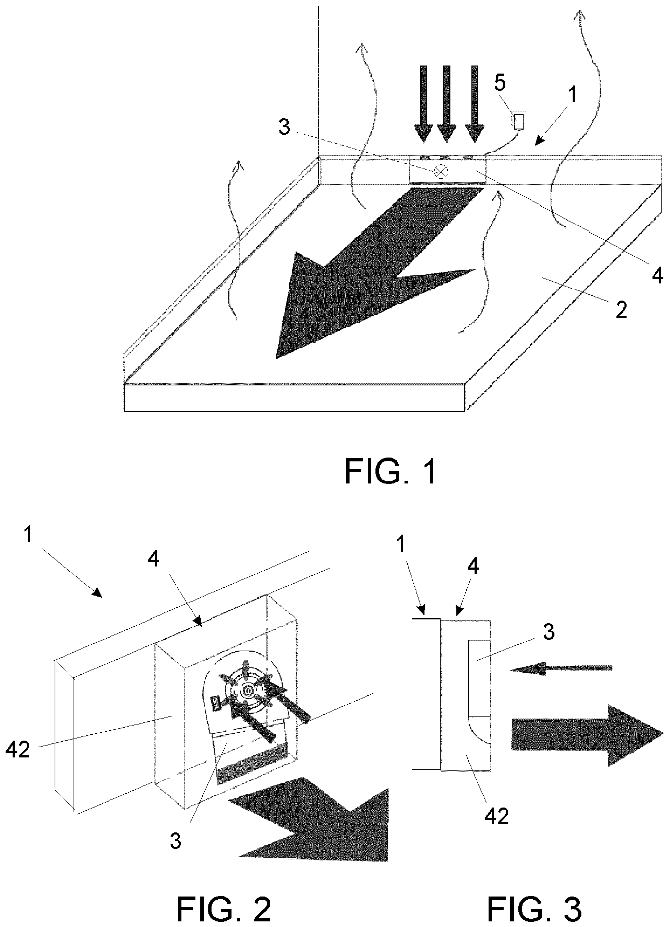

Therefore, as can be noted in these figures, the skirting board (1) in question is applicable for its incorporation to at least one side of the radiant floor (2), that is only for heating or for cooling or for both, and, being formed as well known in the form of a long board of any adequate material. It is distinguished by having incorporated to it, either during its own manufacturing process or else subsequently, already manufactured, and either installed or not, some generating means (3) of a forced air current directed on the radiant floor (2) in such a way, as seen in Figure 1, it provides a convective effect that results in better effectivity of the flow that emanates from this floor (2).

Preferably, these generating means of the described air current consist of fans (3).

In a realisation option in which the body of the skirting board (1) is already manufactured, these fans (3) are added, being integrated into a small module (4) that is connected to a section of the skirting board (1), being able to be screwed or glued over or in front of the skirting board (1), or fit into a gap made or reserved for this purpose. In any case, said module (4) has one or more electric fans with a power supply of 12/24 V., fed by a small transformer (not shown) from which stem the corresponding wire and plug (5) for connection to the electrical network. Preferably, the body of the skirting board (1) is hollow in order to hide the wires.

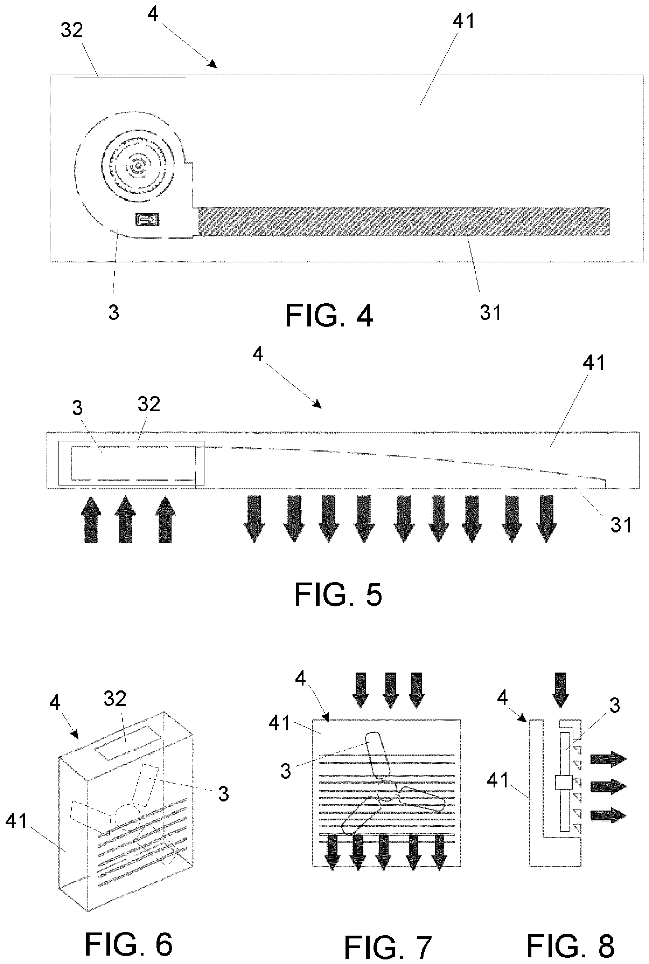

In a realisation option, the module (4) has a casing (41) consisting of a closed and hollow body in whose interior is hidden the fan (3) or fans, as the example in Figures 4 and 5 and the example of Figures 6 and 8 show. And in another realisation option, as shown in Figures 2 and 3, the module (4) includes an open support (42) in which the fan (3) is inserted in view.

Independently of the above, the fan (3) or fans that the skirting board (1) incorporate as means to generate the forced air current, either as the described module (4) to be incorporated to an existing skirting board (1) or as elements integrated during its manufacturing, can consist of:

- a direct radial fan, either inserted and in view as shown in the example of Figures 2 and 3, or hidden as shown in figures 6 to 8, where this fan is directly driving and taking air in the same axis;

- a displaced radial fan, as showing in the example of Figures 4 and 5, where the air aspiration area is displaced with respect to the driving area of the air, for example, through the incorporation of a pipe or grates (31).

It is advisable to point out that in the figures the orientation of the inlet and outlet air flows that generate the current (3) in the different types of modules (4) are represented by arrows.

Lastly, it can be pointed out that, preferably, in front of the generating means (3) of the forced air current, specifically at some point of the inlet (32) of air aspiration, the incorporation of dust protection means are considered, for example filters or mesh, to prevent their becoming clogged and the consequent decrease in effective performance.

Having sufficiently described the nature of this invention, as well as the way to put it into practice, it is not necessary to extend its description further so that any expert in the subject may understand its scope and the advantages that are derived from it, noting that, within its essential design, it can be carried out in other forms of realisation that differ in details from that indicated as an example, and to which the protection that is sought will extend, as long as it does not alter, change or modify its fundamental principle.

**Claims**

1.  SKIRTING BOARD FOR RADIANT SURFACES that, applicable for incorporation in, at least, one of the sides of a radiant floor (2) and being shaped from a body in the form of a long board of any adequate material, is **characterised in that** it includes the generation means (3) of a forced air current directed on said radiant floor (2).

2.  SKIRTING BOARD FOR RADIANT SURFACES, according to claim 1, **characterised in that** these generating means of the air current consist of fans (3).

3.  SKIRTING BOARD FOR RADIANT SURFACES, according to claim 2, **characterised in that** the fans (3) are integrated into a small module (4) which is connected to a section of the body of the skirting board (1).

4.  SKIRTING BOARD FOR RADIANT SURFACES, according to claim 3, **characterised in that** the module (4) is screwed or glued over or in front of the body of the skirting board (1).

5.  SKIRTING BOARD FOR RADIANT SURFACES, according to claim 3, **characterised in that** the module (4) is fit into a gap made or reserved for this purpose in the body of the skirting board (1).

6.  SKIRTING BOARD FOR RADIANT SURFACES, according to claims 3 to 5, **characterised in that** the module (4) has one or more electric fans with power supply of 12/24 V and a transformer from which comes the corresponding wire and plug (5) for connection to the electrical network.

7.  SKIRTING BOARD FOR RADIANT SURFACES, according to any of the claims 3 to 6, **characterised in that** the module (4) has a casing (41) that consists of a closed and hollow body in whose interior is hidden the fan (3) or fans.

8.  SKIRTING BOARD FOR RADIANT SURFACES, according to any of the claims 3 to 6, **characterised in that** the module (4) has an open support (42) in which the fan (3) is inserted in view.

9.  SKIRTING BOARD FOR RADIANT SURFACES, according to any of the claims 2 to 8, **characterised in that** the fan (3) or fans are direct radial fans, that are directly driving and taking air in the same axis.

10. SKIRTING BOARD FOR RADIANT SURFACES, according to any of the claims 2 to 8, **characterised in that** the fan (3) or fans are displaced radial fans, where the air aspiration area is displaced with respect to the air impulsion area.

11. SKIRTING BOARD FOR RADIANT SURFACES, according to any of the claims 2 to 10, **characterised in that**, in front of the generating means of the forced air current, dust protection means are incorporated at some point of the air aspiration inlet (32).

FIG. 1

FIG. 2

FIG. 3

FIG. 4

FIG. 5

FIG. 6

FIG. 7

FIG. 8

Europäisches
Patentamt

European
Patent Office

Office européen
des brevets

# EUROPEAN SEARCH REPORT

Application Number

EP 19 16 6474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ES 2 073 340 A2 (QUINTANILLA AVILA JESUS [ES]; GALLEGO AMOR JULIO) 1 August 1995 (1995-08-01) | 1-4,6-9, 11 | INV. F24D3/14 F24D3/16 F24D19/00 |
| A | * paragraphs [0007] - [0025]; figures 1,2 * | 5,10 | |
| X | GB 2 130 705 A (PEDSHIRE LIMITED) 6 June 1984 (1984-06-06) | 1,2,9 | |
| A | * the whole document * | 3-8,10, 11 | |
| A | JP 2002 333149 A (TOKYO GAS CO LTD) 22 November 2002 (2002-11-22) * abstract; figures 1-3 * | 1-11 | |

TECHNICAL FIELDS
SEARCHED     (IPC)

F24D

The present search report has been drawn up for all claims

| Place of search | Date of completion of the search | Examiner |
|---|---|---|
| Munich | 11 October 2019 | von Mittelstaedt, A |

EPO FORM 1503 03.82 (P04C01)

**ANNEX TO THE EUROPEAN SEARCH REPORT
ON EUROPEAN PATENT APPLICATION NO.**

EP 19 16 6474

This annex lists the patent family members relating to the patent documents cited in  the above-mentioned European search report.
The members are as contained in the European Patent Office EDP file on
The European Patent Office is in no way liable for these particulars which are merely given for the purpose of information.

11-10-2019

| Patent document cited in search report | | Publication date | Patent family member(s) | Publication date |
|---|---|---|---|---|
| ES 2073340 | A2 | 01-08-1995 | NONE | |
| GB 2130705 | A | 06-06-1984 | NONE | |
| JP 2002333149 | A | 22-11-2002 | NONE | |

EPO FORM P0459

For more details about this annex : see Official Journal of the European Patent Office, No. 12/82